# FASCICULE DE BREVET EUROPEEN

(11) **EP 3 328 559 B1**
(45) Date de publication et mention de la délivrance du brevet: **19.03.2025**
(21) Numéro de dépôt: 16745117.8
(22) Date de dépôt: 29.07.2016
(51) Int. Cl.: B08B 3/12, B08B 7/02, B22F 3/105, B29C 67/00

(54) **INSTALLATION DE NETTOYAGE DE PLATEAUX DE FABRICATION ADDITIVE**
EINHEIT ZUR REINIGUNG VON PLATTEN ZUR GENERATIVEN FERTIGUNG
UNIT FOR CLEANING ADDITIVE MANUFACTURING PLATES

(30) Priorité: 30.07.2015 FR 1557317
(43) Date de publication de la demande: 06.06.2018
(73) Titulaire: AddUp, 63118 Cébazat (FR)
(72) Inventeur: POURCHER, Benoît, 63040 Clermont-Ferrand Cedex 9 (FR); WALRAND, Gilles, 63040 Clermont-Ferrand Cedex 9 (FR); PIALOT, Frédéric, 63040 Clermont-Ferrand Cedex 9 (FR); EFFERNELLI, Albin, 63040 Clermont-Ferrand Cedex 9 (FR); TORRES-CASTELLANO, Miguel, 63040 Clermont-Ferrand Cedex 9 (FR)
(74) Mandataire: Novagraaf Group
(86) Numéro de dépôt international: PCT/EP2016/068238
(87) Numéro de publication internationale: WO 2017/017272

(56) Documents cités:
- WO-A1-2015/071184
- WO-A1-90/03893
- WO-A1-97/28909
- US-A1- 2001 045 678
- US-A1- 2014 065 194

## Description

L'invention se situe dans le domaine de la fabrication additive à base de poudre par frittage ou fusion des grains de cette poudre à l'aide d'un faisceau énergétique à rayonnement électromagnétique, comme par exemple un faisceau laser, et/ou d'un faisceau de particules, comme par exemple un faisceau d'électrons.

Plus précisément, l'invention concerne le nettoyage des plateaux de fabrication additive et des pièces fabriquées sur ces plateaux.

Lors de la mise en oeuvre d'un procédé de fabrication additive au sein d'une machine de fabrication additive, une première couche de poudre est déposée sur un plateau de fabrication additive monté coulissant à l'intérieur d'une enceinte entourant le plateau de fabrication. Ensuite, cette première couche de poudre est consolidée selon un motif prédéterminé à l'aide de l'un des faisceaux énergétiques précités. Puis, le plateau de fabrication est abaissé dans son enceinte de manière à permettre le dépôt et la consolidation d'une deuxième couche de poudre. Enfin, les étapes d'abaissement du plateau puis de dépôt et de consolidation de couches de poudre se succèdent jusqu'au dépôt et à la consolidation de la dernière couche de poudre utile à la fabrication des pièces à réaliser.

Selon un inconvénient rencontré à la fin de ce procédé de fabrication additive, la ou les pièces fabriquées se retrouvent noyées au milieu d'une importante quantité de poudre non consolidée qui doit être évacuée.

Selon une première méthode, le plateau de fabrication est extrait de la machine, avec ou sans son enceinte, et un opérateur dégage manuellement les grains de poudre en s'aidant d'outils tels une brosse et une soufflette à air comprimé ou un aspirateur.

En raison de sa mise en oeuvre essentiellement manuelle, cette première méthode de nettoyage est difficilement compatible avec une application industrielle.

De plus, ce nettoyage manuel peut être dangereux pour l'opérateur car les poudres utilisées en fabrication additive contiennent généralement des composés chimiques toxiques pouvant être inhalés par les opérateurs malgré leurs équipements de protection.

Enfin, selon un autre inconvénient, si la poudre non consolidée n'est pas maintenue sous atmosphère protectrice pendant le nettoyage, elle doit subir plusieurs traitements avant de pouvoir être réutilisée.

Aussi, certains fabricants de machines de fabrication additive ont modifié leurs machines de manière à mieux protéger la santé des opérateurs et de façon à pouvoir réutiliser immédiatement la poudre issue du nettoyage des pièces fabriquées.

Par exemple, la machine de fabrication additive décrite dans le brevet européen EP1793979 est équipée de moyens permettant à un opérateur de manipuler et de nettoyer les pièces fabriquées dans l'enceinte de fabrication de la machine.

Plus en détail, ces moyens comprennent des ouvertures réalisées dans une paroi de l'enceinte de fabrication, un bras robot installé dans l'enceinte de fabrication, et un tuyau d'aspiration manipulable dans cette enceinte de fabrication. De plus, les ouvertures sont munies de gants de protection permettant à un opérateur d'introduire ses mains dans l'enceinte de fabrication pour procéder au nettoyage des pièces fabriquées à l'aide du tuyau d'aspiration, et l'opérateur peut commander le bras robot depuis l'extérieur de la machine afin de déplacer facilement les pièces les plus lourdes.

Grâce aux moyens décrits dans le brevet européen EP1793979, l'opérateur est protégé et la poudre non consolidée est maintenue sous atmosphère protectrice.

Toutefois, le nettoyage reste une opération manuelle nécessitant le travail d'un opérateur, et comme ce nettoyage manuel a lieu dans l'enceinte de fabrication de la machine, celle-ci ne peut être utilisée pour fabriquer de nouvelles pièces pendant toute la durée du nettoyage.

Aussi, dans le brevet européen EP1192040, il est prévu de fabriquer les pièces dans un récipient amovible qui peut être extrait de l'enceinte de fabrication de la machine de fabrication additive et conduit vers un dispositif de nettoyage indépendant de cette machine.

Dans un premier mode de réalisation de ce dispositif de nettoyage, un couvercle muni de deux ouvertures en vis-à-vis l'une de l'autre est placé sur le sommet du récipient, et une source d'air comprimé est reliée à la première ouverture tandis qu'un réservoir est relié à la deuxième ouverture. Ainsi, et en faisant monter progressivement le plateau de fabrication et les pièces fabriquées vers le sommet du récipient, le flux d'air comprimé pousse la poudre non consolidée vers la deuxième ouverture et donc dans le réservoir.

Selon un inconvénient de ce premier mode de réalisation, il existe un risque de polluer la poudre avec le flux d'air comprimé utilisé pour pousser la poudre vers le réservoir.

Dans un second mode de réalisation, le sommet du récipient est équipé d'un col évasé comprenant un bec permettant d'évacuer la poudre non consolidée lorsque le récipient est incliné grâce à des moyens appropriés et que le plateau de fabrication monte progressivement.

Dans ce second mode de réalisation, la poudre non consolidée est avantageusement évacuée par gravité vers un réservoir. Ensuite, le réservoir étant équipé d'un tamis de réception des pièces fabriquées, des vibrations sont utilisées pour finir de séparer les grains de poudre des pièces fabriquées.

Si ce second mode de réalisation du dispositif de nettoyage n'emploie pas de flux d'air comprimé susceptible de polluer la poudre non consolidée, il ne permet pas non plus de nettoyer parfaitement les pièces fabriquées.

En effet, sous l'effet des vibrations, les grains de poudre les plus fins sont susceptibles de flotter dans l'air sous forme d'un brouillard et de se déposer à nouveau sur les pièces fabriquées une fois la mise en vibration stoppée.

De plus, dans le cas où les pièces fabriquées sont de formes complexes avec des cavités susceptibles de contenir des agglomérats de poudre, de simples vibrations ne suffisent pas à désagréger les amas de poudre qui peuvent se former dans ces cavités lors de la fabrication additive.

Enfin, la simple utilisation de vibrations ne permet pas de retirer tous les grains de poudre collés aux pièces fabriquées comme le permet par exemple un brossage manuel.

Aussi, la présente invention a pour objectif de parer à au moins l'un des inconvénients des dispositifs décrits dans les documents de l'art antérieur, tout en permettant de nettoyer un plateau de fabrication seul ou avec les pièces qui ont été fabriquées sur ce plateau et qui peuvent être solidaires de ce plateau à la fin du cycle de fabrication additive.

Le document US 2014/065194 A1 décrit quant à lui une installation de nettoyage d'un plateau de fabrication additive effectuée à l'aide de poudre et d'un agent liant par vibration suivie d'une étape de nettoyage a sec.

A cet effet, l'invention a pour objet une installation de nettoyage d'un plateau de fabrication additive effectuée à l'aide de poudre, l'installation comprenant un sas d'entrée permettant de recevoir un plateau à nettoyer et un sas de sortie permettant d'extraire un plateau nettoyé de l'installation.

Selon l'invention, l'installation comprend un dispositif de nettoyage à sec selon la revendication 1, permettant de nettoyer un plateau à l'aide de vibrations et de chocs dans une première enceinte de confinement, un dispositif de nettoyage humide permettant de nettoyer un plateau à l'aide d'au moins un liquide dans une seconde enceinte de confinement, et au moins un dispositif de convoyage permettant de transporter un plateau entre l'enceinte de nettoyage à sec, l'enceinte de nettoyage humide, et le sas de sortie de l'installation.

En utilisant des chocs et des vibrations pour décoller et séparer les grains de poudre non consolidée des pièces fabriquées et de leur plateau de fabrication, le dispositif de nettoyage à sec permet de récupérer les grains de poudre sans les polluer.

De plus, l'utilisation de chocs permet de désagréger les agglomérats de poudre qui peuvent se former dans les cavités de certaines pièces et qui ne se désagrègeraient pas sous l'effet de simples vibrations.

Enfin, l'invention prévoit aussi d'utiliser des vibrations lors du nettoyage à sec car ces vibrations permettent d'évacuer rapidement les grains de poudre non consolidée encore présents sur les pièces fabriquées et sur le plateau de fabrication après l'application de chocs.

Plus en détail, le dispositif de nettoyage humide comprend dans son enceinte au moins un poste de lavage d'un plateau avec un liquide de lavage et au moins un poste de rinçage d'un plateau avec un liquide de rinçage.

De préférence, le poste de lavage prend la forme d'une cuve remplie de liquide de nettoyage et équipée de moyens d'émission d'ondes ultrasonores de très hautes fréquences dans ce liquide de nettoyage.

Avantageusement, le dispositif de nettoyage humide comprend un poste de séchage dans son enceinte.

En vue d'utiliser l'installation pour alimenter des machines de fabrication additive en plateaux propres et/ou neufs depuis l'extérieur d'un atelier de fabrication additive, un convoyeur permet aussi de transporter un plateau du sas de sortie de l'installation vers l'enceinte de nettoyage à sec.

Selon une première alternative de l'invention, l'installation comprend un premier convoyeur permettant de transporter un plateau de l'enceinte du dispositif de nettoyage à sec vers l'enceinte du dispositif de nettoyage humide et inversement de l'enceinte du dispositif de nettoyage humide vers l'enceinte du dispositif de nettoyage à sec, et un second convoyeur permettant de transporter un plateau de l'enceinte du dispositif de nettoyage humide vers le sas de sortie et inversement du sas de sortie vers l'enceinte du dispositif de nettoyage humide.

Selon une seconde alternative de l'invention, l'installation comprend un convoyeur permettant de transporter un plateau depuis l'enceinte du dispositif de nettoyage à sec vers le sas de sortie et inversement du sas de sortie vers l'enceinte du dispositif de nettoyage à sec, au moins une zone de stockage temporaire de plateaux, et un bras manipulateur permettant de déplacer un plateau entre le dispositif de nettoyage à sec, le dispositif de nettoyage humide, le convoyeur et chaque zone de stockage temporaire.

Enfin, comme l'installation de nettoyage selon l'invention est entièrement automatisée, l'invention prévoit que l'ensemble de l'installation peut être confinée dans une enceinte de protection telle que l'enceinte d'un atelier de fabrication additive comprenant une pluralité de machine de fabrication additive.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue schématique d'un plateau de fabrication additive à nettoyer, le plateau étant équipé d'un support et d'une chemise,
- la figure 2 est une vue schématique de dessus d'un premier mode de réalisation d'une installation de nettoyage selon l'invention, avec des flèches illustrant un cycle de nettoyage d'un plateau,
- la figure 3 est une vue schématique de dessus d'un premier mode de réalisation d'une installation de nettoyage selon l'invention, avec des flèches illustrant l'utilisation de l'installation selon l'invention pour approvisionner un atelier de fabrication additive avec des plateaux propres et/ou neufs,
- la figure 4 est une vue schématique de dessus d'un second mode de réalisation d'une installation de nettoyage selon l'invention, avec des flèches illustrant un cycle de nettoyage d'un plateau et l'utilisation de l'installation selon l'invention pour approvisionner un atelier de fabrication additive avec des plateaux propres et/ou neufs,
- la figure 5 est une vue schématique de dessus d'un dispositif de nettoyage à sec selon l'invention,
- la figure 6 est une vue schématique de face d'un dispositif de nettoyage à sec selon l'invention, cette vue illustrant aussi la réception d'un plateau de fabrication additive à nettoyer par le dispositif de nettoyage à sec,
- la figure 7 est une vue de détail de la figure 6, cette vue illustrant aussi l'arrivée du plateau à nettoyer dans l'enceinte de nettoyage du dispositif de nettoyage à sec,
- la figure 8 est une vue schématique de côté de l'enceinte de nettoyage du dispositif de nettoyage à sec selon l'invention, cette vue illustrant aussi le retournement du plateau à nettoyer prévu par l'invention, et
- la figure 9 est aussi une vue schématique de côté de l'enceinte de nettoyage du dispositif de nettoyage à sec selon l'invention, mais cette vue illustre plus particulièrement le nettoyage du plateau à nettoyer par le dispositif de nettoyage à sec selon l'invention.

La présente invention est relative au nettoyage de plateaux 10 de fabrication additive.

Un plateau de fabrication additive 10 prend la forme d'un support parallélépipédique, généralement métallique, et de quelques centimètres de hauteur et de plusieurs dizaines de centimètres de longueur et de largeur dans un plan P10.

De façon connue, un tel plateau 10 est utilisé comme support de fabrication des pièces à fabriquer à l'intérieur de la chambre de fabrication d'une machine de fabrication additive. Plus en détail, le plateau est monté à l'intérieur d'une enceinte de fabrication entourant le plateau dans cette chambre de fabrication, et le plateau est monté mobile en translation verticale dans cette enceinte de fabrication afin de pouvoir être abaissé avant chaque nouveau dépôt d'un lit de poudre non consolidée.

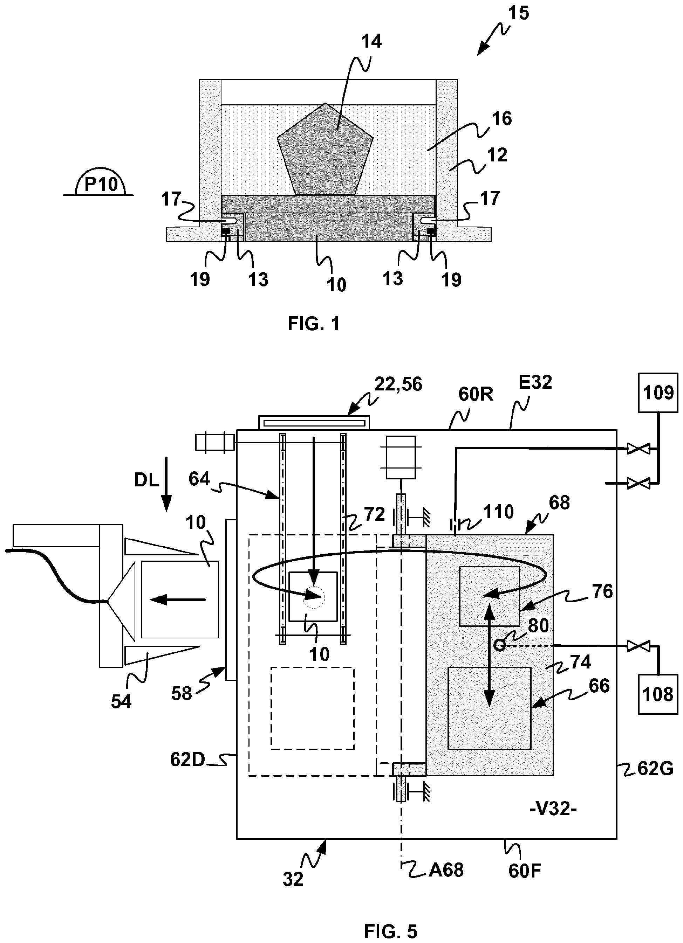

Comme le montre la figure 1, dans le cadre de la présente invention, le plateau 10 est de préférence entouré par une chemise 12 faisant office d'enceinte de fabrication à l'intérieur d'une machine de fabrication additive.

En étant assemblé l'un à l'autre, le plateau 10 et la chemise 12 forment un container 15. Ce container 15 est monté de manière amovible à l'intérieur d'une machine de fabrication additive afin de pouvoir être extrait de la chambre de fabrication de cette machine avec les pièces fabriquées 14 et la poudre non consolidée 16 qui les entoure.

Avantageusement, ce container 15 permet de faciliter le transport des pièces fabriquées 14 et de la poudre non consolidée 16 depuis une machine de fabrication additive vers un autre dispositif présent dans un atelier de fabrication additive ou vers une installation de nettoyage telle que celle proposée par la présente invention.

En vue d'un guidage et d'un transfert automatisé, un support 13 équipe le plateau 10. Ce support 13 prend la forme d'un cadre sur lequel vient s'emboîter un plateau de fabrication 10. Afin d'être maintenu en position par des goujons ou d'autres types d'axes rétractables, ce support 13 comprend des alésages 17. Enfin, ce support 13 est équipé d'un joint d'étanchéité périphérique 19 pour éviter les fuites de poudre lorsque le plateau 10 et son support 13 sont déplacés en translation à l'intérieur de la chemise 12.

La présente invention a pour objectifs principaux de récupérer, sans l'altérer, l'importante quantité de poudre non consolidée 16 qui entoure les pièces 14 dans un container 15 et de débarrasser au mieux les pièces fabriquées 14 et les plateaux de fabrication additive 10 des grains de poudre non consolidée.

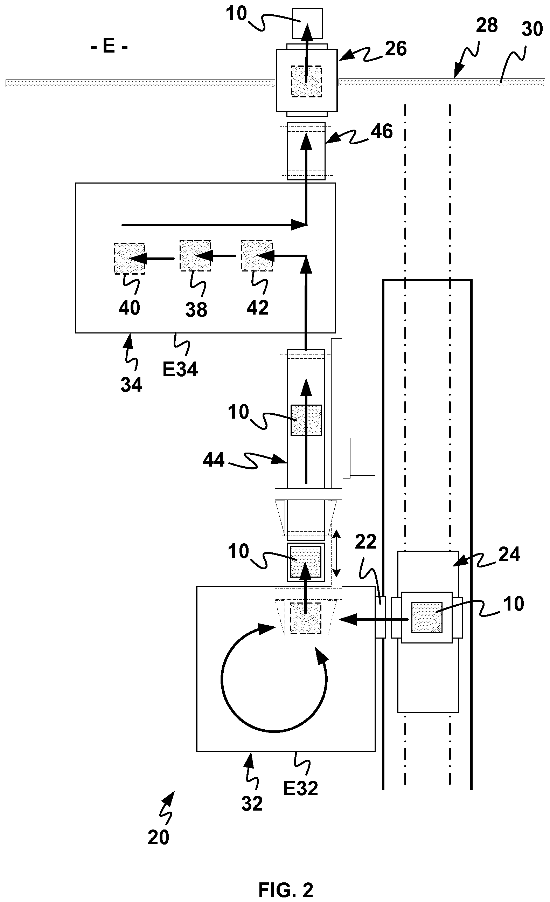

A cet effet, l'invention prévoit une installation 20 de nettoyage de plateaux de fabrication additive telle qu'illustrée en figure 2.

Cette installation 20 comprend un sas d'entrée 22 permettant de recevoir un plateau 10 à nettoyer depuis une machine de fabrication additive, des moyens de transport 24 adaptés étant prévus pour transporter le container 15, les pièces fabriquées 14 et la poudre non consolidée 16 dans les meilleures conditions possibles depuis une machine de fabrication additive jusqu'au sas d'entrée 22 de l'installation.

Afin de pouvoir extraire un plateau 10 nettoyé de l'installation, l'installation 20 comprend aussi un sas de sortie 26. L'ensemble de l'installation 20 étant de préférence confiné dans une enceinte de protection 28 partiellement représentée sur les figures 2 à 4, le sas de sortie 26 est prévu au travers d'une paroi 30 de cette enceinte 28.

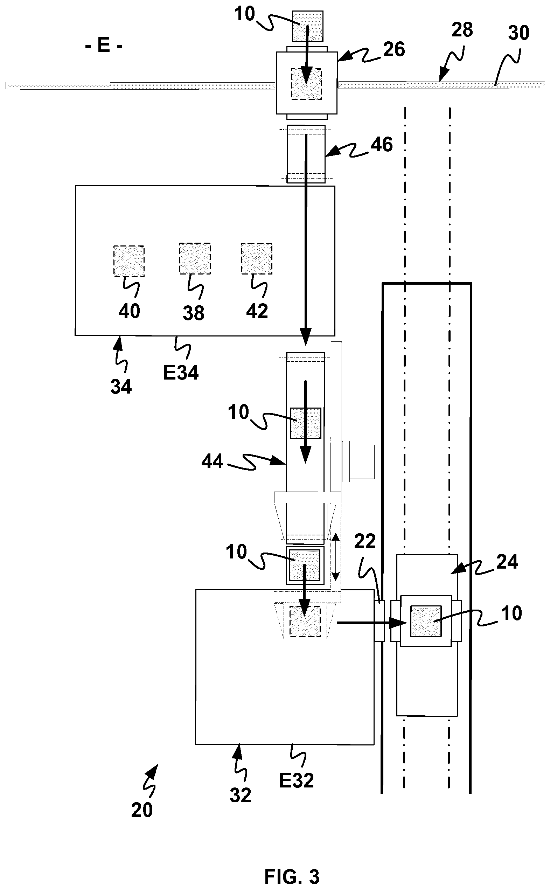

Comme l'illustrent les différentes flèches en figure 3, le sas de sortie 26 peut aussi être utilisé pour approvisionner l'installation 20 en plateaux 10 neufs et/ou propres depuis l'extérieur E de l'installation, et le sas d'entrée 22 peut aussi être utilisé pour extraire des plateaux 10 propres de l'installation 20 de nettoyage en vue de les envoyer à des machines de fabrication additive via les moyens de transport 24.

Afin d'assurer un nettoyage optimal des plateaux 10, l'installation 20 comprend un dispositif de nettoyage à sec 32 permettant de nettoyer un plateau 10 à l'aide de vibrations et de chocs dans une première enceinte de confinement E32, un dispositif de nettoyage humide 34 permettant de nettoyer un plateau 10 à l'aide d'au moins un liquide dans une seconde enceinte de confinement E34, et au moins un dispositif de convoyage permettant de transporter un plateau 10 entre la première enceinte de confinement E32 du dispositif de nettoyage à sec, la seconde enceinte de confinement E34 du dispositif de nettoyage humide, et le sas de sortie 26 de l'installation.

Plus précisément, le dispositif de nettoyage à sec 32 vise à récupérer une quantité maximale de poudre non consolidée sans l'altérer afin de pouvoir réutiliser cette poudre le plus rapidement possible, sans traitement préalable de séchage mais seulement avec un tamisage visant à maîtriser la granulométrie de la poudre ainsi recyclée. Consécutivement, le dispositif de nettoyage humide 34 vise à nettoyer parfaitement les pièces fabriquées 14 et les plateaux de fabrication 10 en retirant tous les grains de poudre non consolidée qui peuvent rester collés aux pièces et aux plateaux après le nettoyage à sec.

Afin d'obtenir un nettoyage parfait des pièces fabriquées 14 et des plateaux de fabrication 10, le dispositif de nettoyage humide 34 comprend dans son enceinte E34 au moins un poste de lavage 38 d'un plateau 10 avec un liquide de nettoyage et au moins un poste de rinçage 40 d'un plateau 10 avec un liquide de rinçage.

De préférence, le poste de lavage 38 prend la forme d'une cuve remplie de liquide de nettoyage et équipée de moyens, tel un transducteur, permettant d'émettre des ondes ultrasonores de très hautes fréquences, de 20 kHz de préférence et éventuellement de 45kHz, dans ce liquide de nettoyage. Ainsi, lorsque le plateau 10 et les pièces 14 à nettoyer sont plongées dans le liquide de nettoyage, les ondes ultrasonores génèrent par un phénomène de cavitation des bulles microscopiques qui implosent sous l'effet de ces mêmes ondes, et ces implosions provoquent des turbulences dans le liquide de nettoyage permettant de détacher les derniers grains de poudre encore collés aux pièces fabriquées 14 et à leur plateau de fabrication 10. Avantageusement, la taille microscopique des bulles leur permet de pénétrer dans les plus petites cavités des pièces fabriquées 14.

Idéalement, le liquide de nettoyage est une solution aqueuse et le liquide de rinçage est aussi une solution aqueuse.

En vue de faciliter l'étape de lavage et d'améliorer la qualité du nettoyage réalisé, le dispositif de nettoyage humide 34 peut comprendre dans son enceinte E34 un poste de prélavage 42, évidemment situé en amont du poste de lavage 38.

Ce poste de prélavage 42 peut prendre la forme d'une cuve remplie de liquide de prélavage et le liquide de prélavage est de préférence une solution aqueuse.

Le poste de rinçage 40 peut aussi faire office de poste de séchage et comprendre des moyens de séchage des plateaux nettoyés et des pièces fabriquées 14, ces moyens de séchage prenant par exemple la forme d'une cuve équipée d'un souffleur d'air chaud.

En vue d'une automatisation complète de l'installation, le dispositif de nettoyage humide 34 comprend dans son enceinte E34 des moyens de convoyage (non représentés) permettant de convoyer de manière automatisée les plateaux 10 à nettoyer et les pièces fabriquées 14 accrochées à ces plateaux 10 entre les différents postes de prélavage 42, de lavage 38 et de rinçage 40.

Dans une variante de réalisation non illustrée sur les figures, le dispositif de nettoyage humide 34 peut comprendre une seule chambre de travail dans laquelle les plateaux 10 peuvent être prélavés, lavés et éventuellement séchés, et différentes chambres de stockage pour stocker les plateaux 10 avant, entre et/ou après ces différentes étapes.

Comme l'illustre la figure 3, les moyens de convoyage du dispositif de nettoyage humide 34 permettent aussi de convoyer des plateaux 10 neufs et/ou propres au travers de l'enceinte E34 du dispositif de nettoyage humide 34, sans passer par les différents postes de lavage et de rinçage.

Dans un premier mode de réalisation de l'installation illustré par les figures 2 et 3, l'installation comprend un premier convoyeur 44 permettant de transporter des plateaux 10 en cours de nettoyage depuis la première enceinte de confinement E32 du dispositif de nettoyage à sec 32 vers la seconde enceinte de confinement E34 du dispositif de nettoyage humide 34, et un second convoyeur 46 permettant de transporter les plateaux 10 nettoyés depuis la seconde enceinte de confinement E34 du dispositif de nettoyage humide 34 vers le sas de sortie 26 de l'installation 20.

Dans l'objectif d'utiliser le sas de sortie 26 de l'installation pour introduire des plateaux 10 neufs et/ou propres dans un atelier de fabrication additive via l'installation de nettoyage 20, le second convoyeur 46 permet aussi de transporter des plateaux 10 depuis le sas de sortie 26 de l'installation 20 vers la seconde enceinte de confinement E34 du dispositif de nettoyage humide 34, et le premier convoyeur 44 permet aussi de transporter des plateaux 10 depuis la seconde enceinte de confinement E34 du dispositif de nettoyage humide 34 vers la première enceinte de confinement E32 du dispositif de nettoyage à sec 32.

Dans un tel cas d'utilisation de l'installation 20 pour alimenter un atelier de fabrication additive en plateaux 10 neufs et/ou propres, il peut être prévu de procéder à un nettoyage humide de ces plateaux 10 dans le dispositif de nettoyage humide 34. On s'assure ainsi du parfait nettoyage et de la décontamination de ces plateaux 10 avant leur utilisation au sein d'une machine de fabrication additive, ces plateaux 10 ayant pu être pollués à l'extérieur E de l'enceinte 28 de l'installation 20 lors d'une manutention manuelle ou lors d'un stockage sans protection.

Dans ce premier mode de réalisation de l'installation 20, les deux convoyeurs 44,46 peuvent être des convoyeurs à bande.

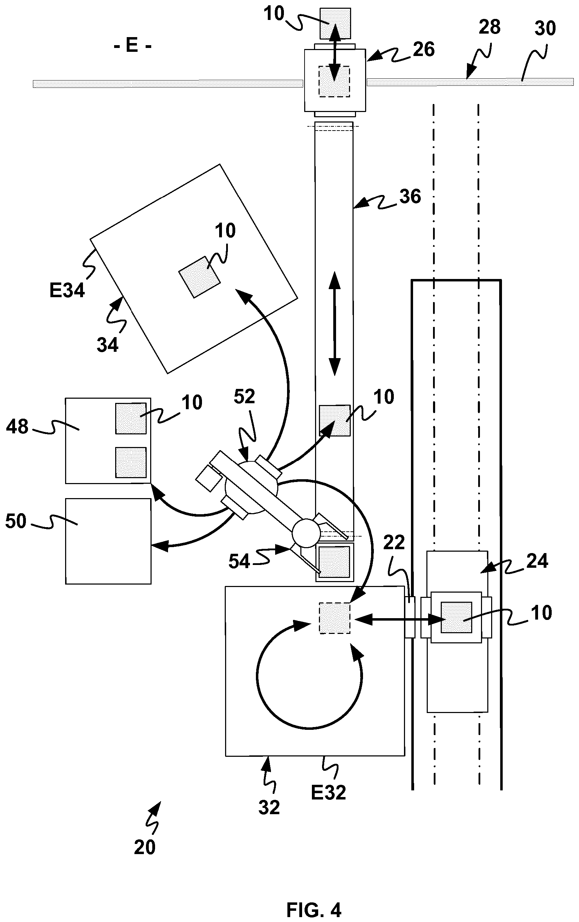

Dans un second mode de réalisation de l'installation 20 illustré par la figure 4, l'installation comprend un convoyeur 36 permettant de transporter des plateaux 10 depuis la première enceinte de confinement E32 du dispositif de nettoyage à sec 32 vers le sas de sortie 26 et inversement du sas de sortie 26 vers la première enceinte de confinement E32 du dispositif de nettoyage à sec 32, au moins une zone de stockage 48,50 temporaire de plateaux 10, et un bras manipulateur 52 permettant de déplacer un plateau 10 entre le dispositif de nettoyage à sec 32, le dispositif de nettoyage humide 34, le convoyeur 36 et chaque zone de stockage 48,50 temporaire.

Plus en détail, le convoyeur 36 peut être un convoyeur à bande, chaque zone de stockage 48,50 peut prendre la forme d'un dispositif de stockage ouvert tel une étagère, et le bras manipulateur 52 est un bras articulé au bout duquel est monté un dispositif de préhension 54 d'un plateau 10 comme par exemple une pince.

Grâce à la présence d'au moins une zone de stockage 48,50, le bras manipulateur 52 permet par exemple de gérer les étapes de nettoyage à sec et humide de différents plateaux 10 pendant que le convoyeur 36 est utilisé pour transférer des plateaux propres 10 depuis le sas de sortie 26 jusqu'au dispositif de nettoyage à sec 32.

De préférence, il est prévu deux zones de stockage 48 et 50 temporaires afin d'éviter de stocker dans une même zone des plateaux 10 propres et des plateaux 10 en cours de nettoyage.

Toujours de préférence, le bras manipulateur 52 est mobile en rotation autour de différents axes horizontaux et/ou verticaux afin de déplacer le plus rapidement possible chaque plateau 10 d'un point à un autre.

Selon une variante non illustrée et plus économique de ce second mode de réalisation, le bras manipulateur 52 peut être supprimé et le convoyeur 36 peut être agencé de manière à assurer seul le transport des plateaux 10 entre la première enceinte de confinement E32 du dispositif de nettoyage à sec, la seconde enceinte de confinement E34 du dispositif de nettoyage humide, et le sas de sortie 26 de l'installation.

Pour réaliser le nettoyage à sec des plateaux 10 à l'aide de chocs et de vibrations, l'invention propose un dispositif de nettoyage à sec 32 d'un plateau 10.

Comme indiqué précédemment, ce dispositif de nettoyage à sec 32 comprend une première enceinte de confinement E32. Afin de recevoir un plateau 10 à nettoyer, cette première enceinte de confinement E32 comprend au moins un sas d'entrée 56, et afin d'évacuer un plateau 10 nettoyé, cette première enceinte de confinement E32 comprend aussi un sas de sortie 58. Avantageusement, le sas d'entrée 56 de la première enceinte de confinement E32 du dispositif de nettoyage à sec 32 est aussi le sas d'entrée 22 de l'installation 20.

La première enceinte de confinement E32 du dispositif de nettoyage à sec étant formée sur le sol S par une paroi avant 60F, une paroi arrière 60R, une paroi latérale gauche 62G, une paroi latérale droite 62D et un plafond P, le sas d'entrée 56 est prévu au travers de la paroi arrière 60R de la première enceinte de confinement E32, et le sas de sortie 58 est prévu au travers de la paroi latérale droite 62D de la première enceinte de confinement E32.

Comme l'illustre la figure 5, à l'intérieur de cette première enceinte de confinement E32, le dispositif de nettoyage à sec 32 comprend des moyens de réception 64 d'un plateau 10 à nettoyer et un poste de nettoyage à sec 66 de ce plateau.

Plus précisément, les moyens de réception 64 permettent de recevoir et de transporter un container 15 formé par un plateau 10 à nettoyer, son support 13 et sa chemise 12.

Ces moyens de réception 64 prennent par exemple la forme d'un convoyeur à chaîne 72. Ce convoyeur à chaîne 72 s'étend horizontalement à l'intérieur de la première enceinte de confinement E32 du dispositif de nettoyage à sec, et dans une direction longitudinale DL parallèle aux plans des parois latérales 62G,62D de la première enceinte de confinement E32 et perpendiculaire aux parois avant 60F et arrière 60R de cette enceinte. Ainsi, ce convoyeur à chaîne 72 permet de transporter un container 15, et donc un plateau 10 à nettoyer, depuis le sas d'entrée 56 de la première enceinte de confinement E32 vers le poste de nettoyage à sec 66.

En vue de faciliter la récupération de la poudre non consolidée 16 contenue dans un container 15, le dispositif de nettoyage à sec 32 comprend une seconde enceinte de nettoyage 68 à l'intérieur de sa première enceinte de confinement E32.

Cette seconde enceinte de nettoyage 68 prend la forme d'une cloche 70 montée sur une embase 74, et cette embase 74 comprend une ouverture 76 de réception d'un plateau 10 à nettoyer.

Plus précisément, l'embase 74 est sensiblement plane et rectangulaire, tandis que la cloche 70 a une forme pyramidale S70 s'étendant autour d'un axe central A70 perpendiculaire au plan P74 de l'embase 74. Parallèlement, l'ouverture 76 est de forme et de dimensions ajustées ou ajustables à la forme et aux dimensions des plateaux 10 à nettoyer.

La forme pyramidale de la cloche 70 autour de son axe central A70 facilite l'écoulement et la récupération de la poudre non consolidée 16 lorsque cette cloche 70 est retournée avec un plateau 10 à nettoyer.

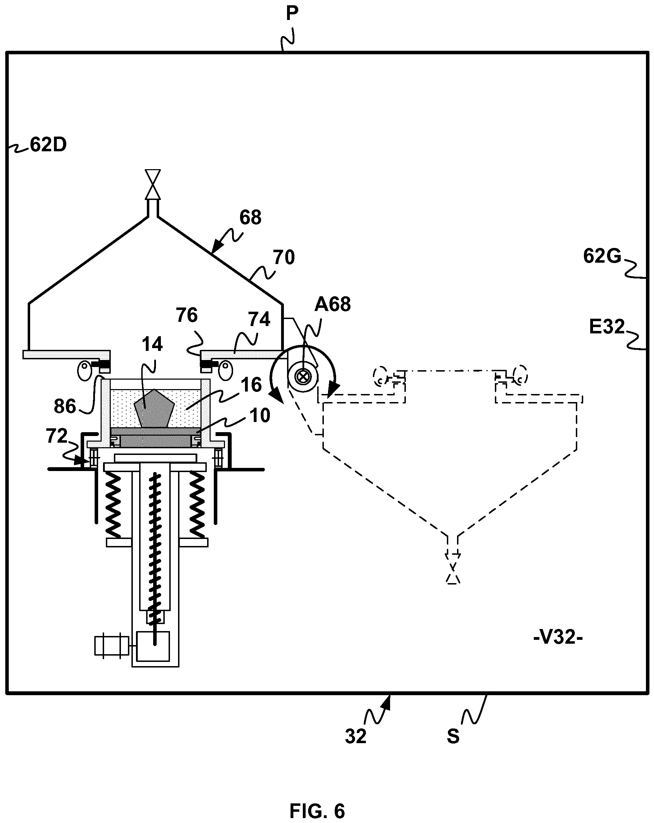

Dans une variante préférée de réalisation illustrée sur les figures 6 à 9, la cloche 70 comprend une partie basse 70B parallélépipédique autour de son axe central A70 et une partie haute 70H pyramidale autour de son axe central A70, la partie basse 70B parallélépipédique s'étendant depuis l'embase 74, et la partie haute 70H pyramidale s'étendant entre cette partie basse 70B et le sommet 78 de la cloche 70.

Dans d'autres variantes, la cloche peut aussi prendre une forme entièrement pyramidale, partiellement ou entièrement conique, partiellement ou entièrement tronconique, ou tout autre forme permettant de former un entonnoir lorsque la cloche 70 est retournée.

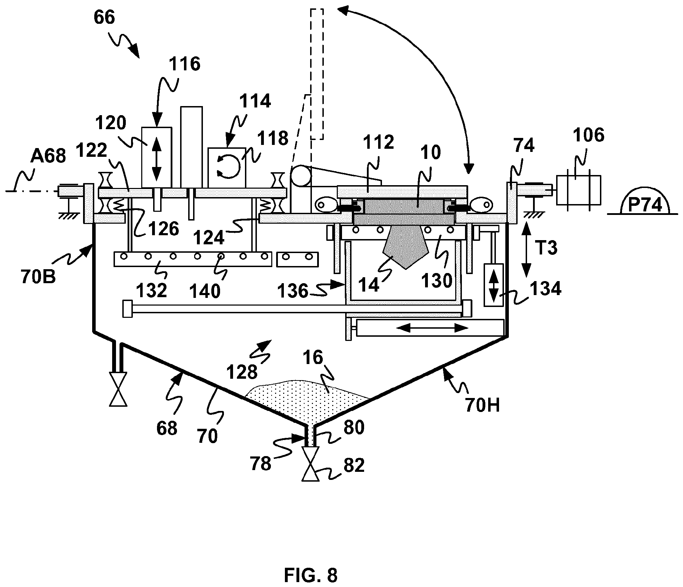

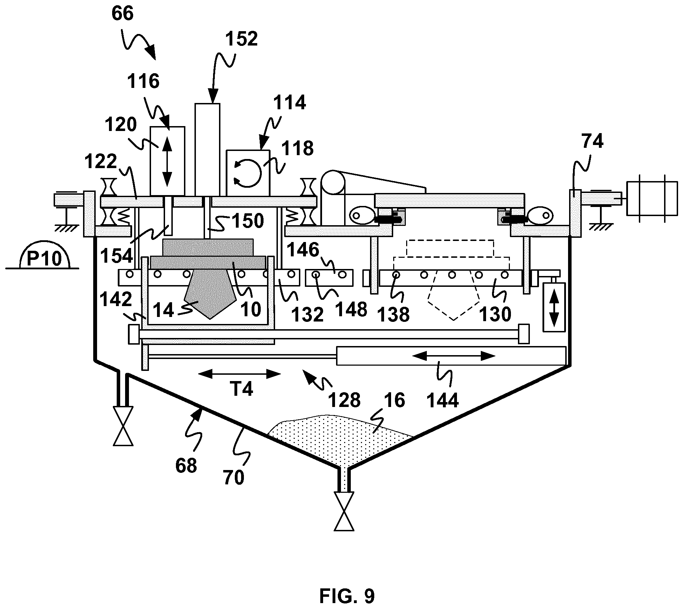

Afin de contrôler l'écoulement de la poudre non consolidée 16 lorsque la cloche 70 est retournée de telle manière que son embase 74 se situe au-dessus de son sommet 78 comme l'illustrent les figures 8 et 9, le sommet 78 de la cloche70 prend la forme d'un conduit 80 équipé d'une vanne 82 ou de tout autre dispositif de régulation de débit.

Comme cela vient d'être indiqué, l'invention prévoit de retourner la cloche 70 et le plateau 10 en vue de récupérer la poudre non consolidée 16 entourant la ou les pièces fabriquées 14 dans un container 15.

Toutefois, dans un premier temps, il est nécessaire d'emmener le container 15 comprenant le plateau 10 à nettoyer et la poudre non consolidée 16 à récupérer vers l'ouverture 76 de l'embase 74 de l'enceinte de nettoyage 68.

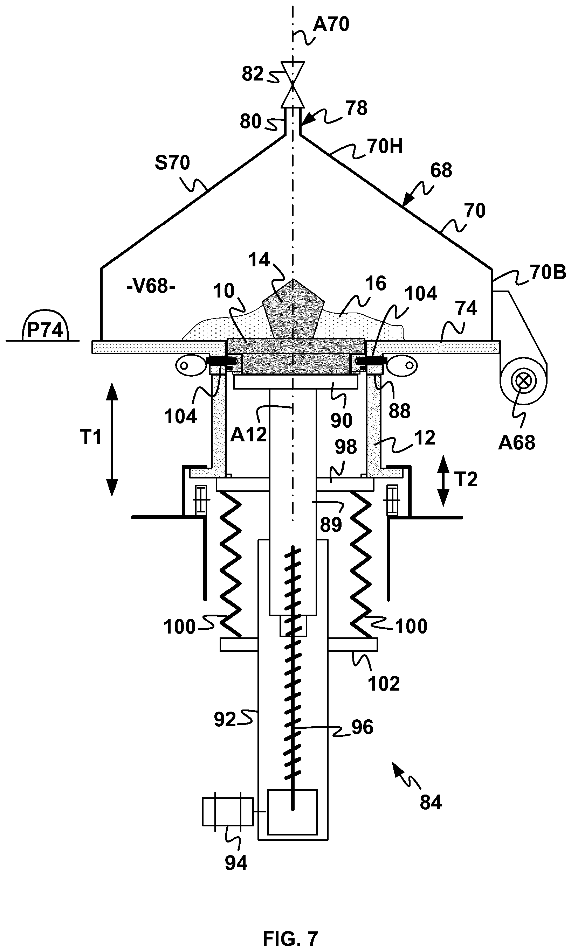

A cet effet, il est prévu que l'enceinte de nettoyage 68 soit dans une position initiale correspondant à une position non retournée dans laquelle la cloche 70 et son sommet 78 se situent au-dessus de l'embase 74. Dans cette position initiale de l'enceinte de nettoyage 68, le plan P74 de l'embase 74 est sensiblement horizontal, comme illustré sur les figures 6 et 7.

Ensuite, les moyens de réception 64 permettent de transporter un container 15, et donc un plateau 10, du sas d'entrée 56 de la première enceinte de confinement E32 jusqu'en face de l'ouverture 76 de l'embase 74 de l'enceinte de nettoyage 68 lorsque cette enceinte de nettoyage 68 se trouve dans sa position initiale.

En complément des moyens de réception 64, le dispositif de nettoyage à sec 32 comprend un ascenseur 84 permettant d'emmener un plateau 10 à nettoyer depuis les moyens de réception 64 jusqu'à l'ouverture 76.

A cet effet et comme illustré par les figures 6 et 7, cet ascenseur 84 permet de déplacer le plateau 10 à nettoyer et son support 13 en translation verticale T1 à l'intérieur de la chemise 12 du container 15. Plus précisément, la chemise 12 s'étendant verticalement en hauteur autour d'un axe central A12, la translation verticale T1 du plateau 10 et de son support 13 s'effectue parallèlement à l'axe central A12 de la chemise 12 et vers le bord supérieur 86 de la chemise 12.

Parallèlement à la mise en translation verticale T1 du plateau 10 et de son support 13, l'ascenseur 84 permet de déplacer la chemise 12 en translation verticale T2 parallèlement à son axe central A12 et vers l'embase 74 de l'enceinte de nettoyage 68. Ainsi, le bord supérieur 86 de la chemise 12 est plaqué contre le bord inférieur 88 de l'ouverture 76 de l'embase 74, ce qui permet d'éviter les fuites de poudre non consolidée 16 lorsque le plateau 10 s'élève dans la chemise 12 et que cette poudre est progressivement transvasée du container 15 vers le volume intérieur V68 de l'enceinte de nettoyage 68.

Pour la mise en oeuvre de la translation verticale T1 du plateau 10 et de son support 13, l'ascenseur 84 comprend par exemple un piston 90 guidé en translation à l'intérieur d'un corps 92 et animé en translation par un moteur 94 et une vis sans fin 96.

Pour la mise en oeuvre de la translation T2 de la chemise 12, l'ascenseur 84 comprend par exemple une plaque 98 guidée en translation autour de la tige 89 du piston 90 et animée en translation par des ressorts de compression 100 en appui sur une autre plaque 102 fixée au corps 92.

Avantageusement, les plaques 98,102 et les ressorts 100 sont dimensionnés et positionnés par rapport corps 92 et au piston 90 de façon que la mise en translation du piston 90 par le moteur 94 entraîne aussi la mise en translation de la plaque 98 sous l'effet des ressorts 100.

Une fois le plateau 10 arrivé dans le plan P74 de l'embase 74, la translation T1 du plateau est stoppée, et des éléments de verrouillage tels des goujons 104 viennent immobiliser le support 13 dans l'ouverture 76 de l'embase 74, ces goujons 104 pénétrant à cet effet dans les alésages 17 prévus dans le support 13.

Avantageusement, dans cette position du plateau 10 par rapport à l'embase 74, le joint d'étanchéité périphérique 19 du support 13 réalise aussi l'étanchéité entre le support 13 et l'embase 74, et donc entre le plateau 10 et l'embase 74.

Lorsque le plateau 10 est solidarisé à l'embase 74, la ou les pièces fabriquées 14 et la poudre non consolidée 16 se trouvent dans le volume intérieur V68 de l'enceinte de nettoyage 68, ce qui permet d'envisager un retournement de cette enceinte de nettoyage 68 pour récupérer par gravité la poudre non consolidée 16 et procéder au nettoyage à sec du plateau 10 et de la ou des pièces fabriquées 14.

En vue de ce retournement, l'enceinte de nettoyage 68 est montée pivotante autour d'un axe A68 de préférence horizontal.

Comme l'illustre la figure 8, lorsque l'enceinte de nettoyage 68 est dans sa position retournée, le plan P74 de l'embase 74 est sensiblement horizontal. Aussi, l'enceinte de nettoyage 68 est montée de manière à pouvoir pivoter d'au moins 180° à l'intérieur de la première enceinte de confinement E32 du dispositif de nettoyage à sec 32.

En vue d'une automatisation complète de l'installation, un actionneur tel un moteur électrique 106 permet d'entraîner l'enceinte 68 en rotation autour de son axe A68.

Avantageusement, cet actionneur 106 permet de contrôler l'angle de rotation de l'enceinte de nettoyage 68 autour de son axe A68, par exemple afin de modifier l'inclinaison de l'embase 74 et donc du plateau 10 pendant le cycle de nettoyage à sec.

Lorsque l'enceinte de nettoyage 68 est retournée, la poudre non consolidée 16 chute par gravité vers le sommet 78 de la cloche 70, ce qui permet de récupérer facilement cette poudre via le conduit 80.

De préférence et comme l'illustre la figure 5, des moyens de récupération 108 de poudre par aspiration sont reliés au conduit 80 du sommet de la cloche 70 via la vanne 82, l'aspiration favorisant l'écoulement de la poudre dans le conduit 80 et permettant donc d'éviter son obturation.

Afin d'aspirer les grains de poudre du brouillard de poudre non consolidée 16 qui se forme dans le volume intérieur V68 de l'enceinte de nettoyage lorsque cette enceinte 68 est retournée, la cloche 70 comprend un orifice 110 d'aspiration entre son embase 74 et son sommet 78, cet orifice 110 étant relié à des moyens de récupération 109 d'un brouillard de poudre par aspiration.

De préférence, cet orifice 110 est prévu à mi-hauteur dans la cloche 70. Dans une variante préférée et illustrée par les figures 6 à 9, cet orifice 110 est prévu dans la partie haute 70H pyramidale de la cloche 70, mais à proximité de la partie basse 70B parallélépipédique.

Afin de collecter les éventuels grains de poudre qui pourraient s'échapper d'un container 15 lors de son transport entre le sas d'entrée 56 de la première enceinte de confinement E32 et l'enceinte de nettoyage 68, ou de l'enceinte 68 lors de son retournement par exemple, les moyens de récupération 109 d'un brouillard de poudre par aspiration sont aussi reliés au volume intérieur V32 de la première enceinte de confinement E32 du dispositif de nettoyage à sec 32.

Comparativement aux moyens de récupération 108 de poudre par aspiration, les moyens de récupération 109 d'un brouillard de poudre par aspiration offrent un débit d'aspiration plus important.

Pour s'assurer de la fermeture hermétique de l'enceinte de nettoyage 68 après son retournement avec le plateau 10 à nettoyer, cette enceinte de nettoyage 68 comprend une porte 112 permettant d'obturer l'ouverture 76 de l'embase 74. Cette porte 112 est montée pivotante par rapport à l'embase 74, et elle vient refermer l'enceinte 68 juste derrière le plateau 10 et son support 13. En vue d'une automatisation complète de l'installation, la mise en mouvement de cette porte 112 est aussi entièrement automatisée.

Grâce au retournement de l'enceinte de nettoyage 68 et du plateau 10 à nettoyer et à la partie pyramidale 70H de cette enceinte 68, une grande partie de la poudre non consolidée 16 peut être simplement récupérée par gravité via le sommet 78 de la cloche 70, et de préférence avec l'aide d'une aspiration.

Toutefois, malgré ce retournement et cette aspiration, certains grains de poudre non consolidée 16 peuvent encore adhérer au plateau 10 et à la ou aux pièces fabriquées 14, notamment lorsque ces pièces 14 comportent des cavités et/ou des formes creuses.

Aussi, afin d'entraîner la chute des grains de poudre adhérant encore au plateau 10 ou contenus dans les creux ou les cavités des pièces fabriquées 14, le poste de nettoyage à sec 66 du dispositif de nettoyage à sec 32 comprend des moyens 114 aptes à imposer des vibrations au plateau 10 à nettoyer et des moyens 116 aptes à faire subir des chocs à ce plateau 10. Comme le montrent les figures 8 et 9, ces moyens 114 aptes à imposer des vibrations et ces moyens 116 aptes à faire subir des chocs sont supportés par l'embase 74 de l'enceinte de nettoyage 68 et prévus à côté de l'ouverture 76 recevant le plateau 10 à nettoyer.

Plus en détail, les moyens 114 aptes à imposer des vibrations prennent par exemple la forme d'un vibreur 118 à moteur électrique, et les moyens 116 aptes à faire subir des chocs prennent par exemple la forme d'un percuteur 120 pneumatique.

Afin d'éviter que le vibreur 118 et le percuteur 120 ne propagent des vibrations et des chocs dans l'embase 74 et dans l'ensemble de l'enceinte de nettoyage 68, ce vibreur 118 et ce percuteur 120 sont montés sur une plaque 122 montée sur silentblocs en face d'une ouverture 124 réalisée dans l'embase 74. Avantageusement, des moyens d'étanchéité 126 tels des soufflets sont prévus entre l'embase 74 et la plaque 122.

Comme le montre la figure 9, le vibreur 118 et le percuteur 120 viennent directement au contact du plateau 10, ce qui permet d'améliorer l'efficacité du nettoyage et d'optimiser l'utilisation des vibrations et des chocs.

Comme le poste de nettoyage à sec 66 est situé à distance de l'ouverture 76 recevant le plateau 10 à nettoyer, l'enceinte de nettoyage 68 comprend des moyens internes 128 de convoyage d'un plateau 10 entre son ouverture 76 et les moyens 114,116 du poste de nettoyage à sec 66.

Dans une variante préférée et illustrée sur les figures 8 et 9, ces moyens internes 128 de convoyage d'un plateau comprennent au moins un premier support de guidage 130 mobile en translation, un second support de guidage 132 relié à la plaque 122 supportant les moyens 114,116 du poste de nettoyage à sec 66, et des moyens de transfert 136 d'un plateau 10 du premier support 130 vers le second support 132.

Plus en détail, le premier support 130 est monté mobile en translation à l'intérieur de l'enceinte de nettoyage 68, en face de l'ouverture 76 de l'embase 74, et sa translation T3 s'effectue dans une direction perpendiculaire au plan P74 de l'embase, par exemple sous l'effet d'un vérin 134.

Dans sa position haute illustrée en figure 8, le premier support 130 permet de réceptionner le plateau 10 à nettoyer. L'enceinte 68 et le plateau 10 ayant été retournés, le premier support 130 permet de réceptionner le plateau 10 retourné, c'est-à-dire avec la ou les pièces fabriquées 14 sous le plateau 10. A cet effet, le premier support 130 prend la forme d'une pluralité de doigts 138 espacés les uns des autres et de quelques centimètres de longueur. Avantageusement, les doigts 138 sont arrondis afin d'éviter la rétention de grains de poudre.

Une fois le plateau 10 réceptionné par le premier support 130, ce premier support est translaté de sa position haute à une position basse illustrée en figure 9 autorisant le transfert du plateau 10 à nettoyer vers le second support de guidage 132.

Le second support 132 prenant aussi la forme d'une pluralité de doigts 140 espacés les uns des autres, de quelques centimètres de longueur, et de préférence de forme arrondie, les moyens de transfert 136 d'un plateau 10 prennent la forme d'une fourche 142 guidée en translation entre le premier support 130 et le second support 132. La translation T4 de cette fourche 142 s'effectue dans une direction parallèle au plan P74 de l'embase 74, et par exemple sous l'effet d'un vérin 144. Cette fourche 142 permet de saisir le plateau 10 à nettoyer de façon à le faire glisser depuis les doigts 138 du premier support 130 jusqu'aux doigts 140 du second support 132.

Eventuellement, il peut aussi être prévu un support de guidage intermédiaire 146 entre le premier support 130 et le second support 132, ce support intermédiaire 146 étant aussi formé par des doigts 148 ayant de préférence une forme arrondie.

Une fois plateau 10 présent sur le second support 132, le nettoyage à sec par chocs et vibrations prévus par l'invention peut être mis en oeuvre. Toutefois, et préalablement à la mise en vibrations et aux chocs, la tige 150 d'un vérin 152 supporté par la plaque 122 du poste de nettoyage à sec 66 vient brider le plateau 10 sur le second support 132.

Selon l'invention, la mise en vibrations d'un plateau 10 consiste à faire osciller le plateau 10 à des fréquences comprises entre 40 et 150 Hz, les amplitudes des oscillations du plateau 10 ne dépassant pas 5 millimètres.

Dans la variante de réalisation préférée et illustrée sur les figures 8 et 9, les vibrations sont générées par le vibreur 118 et transmises au plateau 10 et à la ou aux pièces fabriquées 14 via la plaque 122 et le second support 132.

Toujours selon l'invention, les chocs sont assénés à un plateau 10, et donc à la ou aux pièces fabriquées 14 à l'aide d'un corps en mouvement et ayant une énergie cinétique de 20 à 25 Joules lorsqu'il entre en contact avec le plateau 10. De plus, un plateau 10 subit une pluralité de chocs à des fréquences comprises entre 15 et 25 Hz, soit de 120 à 600 chocs au cours d'un cycle de nettoyage à sec pour donner un ordre d'idées.

Dans la variante de réalisation préférée et illustrée sur les figures 8 et 9, les chocs sont assénés au plateau 10 par la tige 154 du percuteur 120.

Grâce à l'application de chocs au plateau 10, les amas de grains de poudre non consolidée 16 susceptibles de se former dans les cavités ou les formes creuses des pièces fabriquées 14 se désagrègent, et grâce l'application de vibrations, ces grains de poudre sont extraits des formes creuses ou des cavités des pièces fabriquées 14 et ils chutent par gravité vers le sommet 78 de la cloche 70.

Une fois terminé le cycle de mise en vibrations et d'application de chocs, le plateau 10 est conduit vers le sas de sortie 58 du dispositif de nettoyage à sec 32 où il peut par exemple être saisi par le dispositif de préhension 54 afin d'être extrait de l'enceinte E32, comme l'illustre la figure 5.

Pour retourner du poste de nettoyage à sec 66 vers le sas de sortie 58 et plus précisément jusqu'aux moyens de réception 64, le plateau 10 nettoyé suit le même trajet qu'à son arrivée mais en sens inverse.

Plus en détail, après avoir libéré le bridage de la tige 154, la fourche 142 ramène le plateau 10 du second support 132 vers le premier support 130, puis le premier support 130 revient en position haute de façon à ramener le plateau 10 dans l'ouverture 76 de l'embase 74. Ensuite, l'enceinte de nettoyage 68 est ramenée dans sa position initiale non retournée, après avoir pris soin d'ouvrir la porte 112, de manière à ce que le plateau 10 soit récupéré par l'ascenseur 84 et son piston 90 qui finissent de conduire le plateau 10 nettoyé jusqu'au convoyeur à chaîne 72 des moyens de réception 64.

Grâce à son automatisation complète, l'installation de nettoyage 20 est particulièrement adaptée à être installée dans un atelier de fabrication additive comprenant une pluralité de machines de fabrication additive.

Avantageusement, l'installation 20, et plus particulièrement le dispositif de nettoyage à sec 32, peuvent être adaptés pour réaliser le nettoyage d'un plateau 10 seul, c'est-à-dire sans chemise 12 formant un container 15 avec ce plateau 10.

De plus, l'installation 20 et les plateaux 10 peuvent aussi être adaptés de manière à éviter l'utilisation de supports 13 des plateaux 10.

Avantageusement, les deux enceintes de confinement E32 et de nettoyage 68 du dispositif de nettoyage à sec 32 offrent un double confinement protégeant au mieux les personnes de la toxicité de certaines poudres de fabrication additive.

D'une manière plus générale, la présente invention vise aussi un procédé de nettoyage à sec d'un plateau 10 de fabrication additive pouvant par exemple être mis en œuvre avec le dispositif de nettoyage à sec 32 qui vient d'être décrit.

Selon l'invention, ce procédé consiste à séparer la poudre non consolidée 16 d'un plateau 10 et à la recueillir en imposant des vibrations au plateau et en faisant subir des chocs au plateau.

Comme indiqué précédemment, les vibrations appliquées au plateau 10 ont des fréquences de préférence comprises entre 40 et 150 Hz, et les amplitudes des oscillations du plateau 10 sous l'effet des vibrations ne dépassent pas 5 millimètres.

De plus, une pluralité de chocs sont assénés à un plateau 10 à l'aide d'un corps en mouvement et ayant une énergie cinétique de 20 à 25 Joules lorsqu'il entre en contact avec le plateau 10.

De préférence, les chocs sont donnés selon une direction orthogonale au plan P10 du plateau 10, et par exemple à l'aide de la tige 154 du percuteur 120. En effet, un plateau 10 étant conçu pour être particulièrement rigide dans sa largeur et sa longueur, il est plus efficace d'appliquer ces chocs perpendiculairement au plateau 10 et donc dans sa hauteur.

De préférence, un plateau 10 subit de 120 à 600 chocs au cours d'un cycle de nettoyage à sec, à des fréquences comprises entre 15 et 25 Hz.

Afin de favoriser la chute par gravité des grains de poudre non consolidée 16 depuis les formes creuses ou les cavités de la ou des pièces fabriquées 14, les vibrations sont de préférence imposées au plateau 10 dans des directions sensiblement parallèles au plan P10 du plateau 10, et par exemple à l'aide d'un vibreur 118.

Toujours afin de favoriser le nettoyage du plateau 10 et des pièces fabriquées, les vibrations peuvent être imposées au plateau 10 dans des directions sensiblement parallèles au plan P10 du plateau 10 mais différentes entre elles. De préférence, les vibrations sont imposées au plateau 10 dans deux directions parallèles au plan P10 du plateau 10 mais perpendiculaires entre elles, et correspondant par exemple aux directions s'étendant dans la longueur et dans la largeur du plateau 10. Cette combinaison de vibrations de différentes directions est avantageuse car elle permet de débarrasser au mieux les pièces fabriquées et leurs cavités des grains de poudre non consolidée, et cela quelles que soient les directions dans lesquelles ces pièces et ces cavités s'étendent parallèlement au plan P10 du plateau.

En vue d'un nettoyage à sec optimal, on alterne plusieurs fois des étapes de vibrations et des étapes de chocs.

Eventuellement, et pour réduire le temps d'un cycle de nettoyage à sec, on réalise simultanément des étapes de vibrations et de chocs.

Par exemple grâce à l'enceinte de nettoyage 68 et à son montage en rotation autour d'un axe horizontal A68, le procédé comprend une étape préalable consistant à retourner le plateau 10, ce retournement permettant de récupérer une grande partie de la poudre non consolidée 16 par gravité.

Toujours en vue d'un nettoyage à sec optimal et de favoriser la chute par gravité des grains de poudre non consolidée 16 depuis les formes creuses ou les cavités de la ou des pièces fabriquées 14, le procédé de nettoyage à sec peut prévoir de faire varier l'inclinaison du plateau 10 au cours des étapes de mise en vibrations et/ou des étapes de d'application de chocs au plateau 10.

Par exemple grâce à l'enceinte de nettoyage 68, le procédé de nettoyage à sec se déroule dans un volume V68 confiné, et de préférence doublement confiné grâce à la première enceinte de confinement E32 du dispositif de nettoyage à sec 32.

Par gravité, ou à l'aide de moyens 108 de récupération de poudre par aspiration, le procédé de nettoyage à sec comprend une étape subséquente à la mise en vibrations et à l'application de chocs consistant à évacuer de ce volume V68 confiné les grains de la poudre non consolidée 16 issue du nettoyage à sec du plateau 10, par exemple en vue de son stockage et de sa réutilisation.

Avantageusement, l'aspiration destinée à la récupération de la poudre non consolidée 16 tombée dans le sommet 78 de la cloche 70 ne fonctionne que pendant quelques secondes.

Par exemple grâce aux moyens de récupération 109 d'un brouillard de poudre reliés à l'enceinte 68 de nettoyage à sec, le procédé prévoit que le volume confiné V68 est soumis à une aspiration complémentaire au cours du nettoyage, cette aspiration complémentaire ayant pour but d'éliminer les éventuels brouillards de poudre pouvant se former à l'intérieur de l'enceinte 68 de nettoyage à sec au cours d'un cycle de nettoyage à sec.

De préférence, l'aspiration complémentaire est au moins maintenue dans l'enceinte de l'enceinte 68 de nettoyage à sec pendant la mise en vibration d'un plateau 10 et pendant l'application de chocs au plateau 10.

Enfin, et par exemple grâce aux moyens de récupération 109 d'un brouillard de poudre reliés à la première enceinte de confinement E32 du dispositif de nettoyage à sec 32, le procédé prévoit que le volume de confinement V32 du dispositif de nettoyage à sec 32 soit aussi soumis à une aspiration complémentaire.

On constate que le dispositif de nettoyage à sec 32 retourne et nettoie uniquement le plateau 10 et les pièces fabriquées solidaires de ce plateau 10. En effet, il n'est pas utile de retourner et de nettoyer la chemise 12 car la translation du plateau 10 avec son support 13 et le joint d'étanchéité 19 suffit à débarrasser les parois intérieures de la chemise 12 des grains de poudre non consolidée. De plus, le retournement de la chemise 12 avec le plateau 10 représenterait une consommation d'énergie supplémentaire et donc inutile.

Selon un autre avantage, le dispositif de nettoyage à sec 32 permet de séparer le plateau 10 et les pièces fabriquées de la chemise 12 afin de transférer uniquement le plateau 10 et les pièces fabriquées vers le dispositif de nettoyage humide 34. En effet, un nettoyage humide des chemises 12 n'est pas nécessaire.

## Revendications

1. Installation (20) de nettoyage d'un plateau (10) de fabrication additive effectuée à l'aide de poudre par frittage ou fusion des grains de cette poudre à l'aide d'un faisceau énergétique à rayonnement électromagnétique, l'installation (20) comprenant un sas d'entrée (22) permettant de recevoir un plateau (10) à nettoyer et un sas de sortie (26) permettant d'extraire un plateau (10) nettoyé de l'installation, un dispositif de nettoyage à sec (32) permettant de nettoyer un plateau (10) à l'aide de vibrations et de chocs dans une première enceinte de confinement (E32), un dispositif de nettoyage humide (34) permettant de nettoyer un plateau (10) à l'aide d'au moins un liquide dans une seconde enceinte de confinement (E34), et au moins un dispositif de convoyage (36,44,46) permettant de transporter un plateau (10) entre la première enceinte de confinement (E32) du dispositif de nettoyage à sec, la seconde enceinte de confinement (E34) du dispositif de nettoyage humide, et le sas de sortie (26) de l'installation, dans laquelle l'installation comprend un premier convoyeur (44) permettant de transporter un plateau (10) de la première enceinte de confinement (E32) du dispositif de nettoyage à sec (32) vers la seconde enceinte de confinement (E34) du dispositif de nettoyage humide (34) et inversement de la seconde enceinte de confinement (E34) du dispositif de nettoyage humide (34) vers la première enceinte de confinement (E32) du dispositif de nettoyage à sec (32), et un second convoyeur (46) permettant de transporter un plateau (10) de la seconde enceinte de confinement (E34) du dispositif de nettoyage humide (34) vers le sas de sortie (26) et inversement du sas de sortie (26) vers la seconde enceinte de confinement (E34) du dispositif de nettoyage humide (34), ou dans laquelle l'installation comprend un convoyeur (36) permettant de transporter un plateau (10) depuis la première enceinte de confinement (E32) du dispositif de nettoyage à sec (32) vers le sas de sortie (26) et inversement du sas de sortie (26) vers la première enceinte de confinement (E32) du dispositif de nettoyage à sec (32), au moins une zone de stockage (48,50) temporaire de plateaux (10), et un bras manipulateur (52) permettant de déplacer un plateau (10) entre le dispositif de nettoyage à sec (32), le dispositif de nettoyage humide (34), le convoyeur (36) et chaque zone de stockage (48,50) temporaire.

2. Installation (20) selon la revendication 1, dans laquelle le dispositif de nettoyage humide (34) comprend dans son enceinte (E34) au moins un poste de lavage (38) d'un plateau (10) avec un liquide de lavage et au moins un poste de rinçage (40) d'un plateau (10) avec un liquide de rinçage.

3. Installation (20) selon la revendication 2, dans laquelle le poste de lavage (38) prend la forme d'une cuve remplie de liquide de nettoyage et équipée de moyens d'émission d'ondes ultrasonores de très hautes fréquences dans ce liquide de nettoyage.

4. Installation (20) selon la revendication 2 ou la revendication 3, dans laquelle le dispositif de nettoyage humide (34) comprend un poste de séchage (40) dans son enceinte (E34).

5. Installation (20) selon l'une des revendications précédentes, l'ensemble de l'installation (20) étant confinée dans une enceinte de protection (28).

## Patentansprüche

1. Anlage (20) zum Reinigen einer Platte (10) für eine additive Fertigung, die mithilfe von Pulver durch Sintern oder Verschmelzen der Körner dieses Pulvers mithilfe eines Energiestrahls mit elektromagnetischer Strahlung durchgeführt wird, die Anlage (20) umfassend eine Einlassschleuse (22), die es ermöglicht, eine zu reinigende Platte (10) aufzunehmen, und eine Auslassschleuse (26), die es ermöglicht, eine gereinigte Platte (10) aus der Anlage zu entnehmen, eine Trockenreinigungsvorrichtung (32), die es ermöglicht, eine Platte (10) mithilfe von Vibrationen und Stößen in einem ersten Einschlussgehäuse (E32) zu reinigen, eine Nassreinigungsvorrichtung (34), die es ermöglicht, eine Platte (10) mithilfe mindestens einer Flüssigkeit in einem zweiten Einschlussgehäuse (E34) zu reinigen, und mindestens eine Fördervorrichtung (36, 44, 46), die es ermöglicht, eine Platte (10) zwischen dem ersten Einschlussgehäuse (E32) der Trockenreinigungsvorrichtung, dem zweiten Einschlussgehäuse (E34) der Nassreinigungsvorrichtung und der Auslassschleuse (26) der Anlage zu transportieren, wobei die Anlage einen ersten Förderer (44), der es ermöglicht, eine Platte (10) aus dem ersten Einschlussgehäuse (E32) der Trockenreinigungsvorrichtung (32) in Richtung des zweiten Einschlussgehäuses (E34) der Nassreinigungsvorrichtung (34) und umgekehrt von dem zweiten Einschlussgehäuse (E34) der Nassreinigungsvorrichtung (34) in Richtung des ersten Einschlussgehäuses (E32) der Trockenreinigungsvorrichtung (32) zu transportieren, und einen zweiten Förderer (46) umfasst, der es ermöglicht eine Platte (10) von dem zweiten Einschlussgehäuse (E34) der Nassreinigungsvorrichtung (34) in Richtung der Auslassschleuse (26) und umgekehrt von der Auslassschleuse (26) in Richtung des zweiten Einschlussgehäuses (E34) der Nassreinigungsvorrichtung (34) zu transportieren, oder wobei die Anlage einen Förderer (36), der es ermöglicht, eine Platte (10) von dem ersten Einschlussgehäuse (E32) der Trockenreinigungsvorrichtung (32) in Richtung der Auslassschleuse (26) und umgekehrt von der Auslassschleuse (26) in Richtung des ersten Einschlussgehäuses (E32) der Trockenreinigungsvorrichtung (32) zu transportieren, mindestens einen Zwischenlagerbereich (48, 50) für Platten (10), und einen Manipulatorarm (52) umfasst, der es ermöglicht, eine Platte (10) zwischen der Trockenreinigungsvorrichtung (32), der Nassreinigungsvorrichtung (34), dem Förderer (36) und jedem Zwischenlagerbereich (48, 50) zu verschieben.

2. Anlage (20) nach Anspruch 1, wobei die Nassreinigungsvorrichtung (34) in ihrem Gehäuse (E34) mindestens eine Waschstation (38) einer Platte (10) mit einer Waschflüssigkeit und mindestens eine Spülstation (40) einer Platte (10) mit einer Spülflüssigkeit umfasst.

3. Anlage (20) nach Anspruch 2, wobei die Waschstation (38) die Form einer mit Reinigungsflüssigkeit gefüllten Wanne annimmt und mit Mitteln zum Aussenden von Ultraschallwellen sehr hoher Frequenzen in diese Reinigungsflüssigkeit ausgestattet ist.

4. Anlage (20) nach Anspruch 2 oder 3, wobei die Nassreinigungsvorrichtung (34) in ihrem Gehäuse (E34) eine Trocknungsstation (40) umfasst.

5. Anlage (20) nach einem der vorstehenden Ansprüche, wobei die gesamte Anlage (20) in einem Schutzgehäuse (28) eingeschlossen ist.

## Claims

1. An installation (20) for cleaning a plate (10) used in powder-based additive manufacturing by sintering or melting grains of this powder using a beam of energy involving electromagnetic radiation, the installation (20) comprising an entry lock (22) for receiving a plate (10) to be cleaned and an exit lock (26) for extracting a cleaned plate (10) from the installation, a dry-cleaning device (32) for cleaning a plate (10) using vibrations and shocks in a first confinement enclosure (E32), a wet-cleaning device (34) for cleaning a plate (10) with at least one liquid in a second confinement enclosure (E34), and at least one conveying device (36, 44, 46) for transporting a plate (10) between the first confinement enclosure (E32) of the dry-cleaning device, the second confinement enclosure (E34) of the wet-cleaning device, and the exit lock (26) of the installation, wherein the installation comprises a first conveyor (44) for transporting a plate (10) from the first confinement enclosure (E32) of the dry-cleaning device (32) to the second confinement enclosure (E34) of the wet-cleaning device (34) and vice versa from the second confinement enclosure (E34) of the wet-cleaning device (34) to the first confinement enclosure (E32) of the dry-cleaning device (32), and a second conveyor (46) for transporting a plate (10) from the second confinement enclosure (E34) of the wet-cleaning device (34) to the exit lock (26) and vice versa from the exit lock (26) to the second confinement enclosure (E34) of the wet-cleaning device (34), or wherein the installation comprises a conveyor (36) for transporting a plate (10) from the first confinement enclosure (E32) of the dry-cleaning device (32) to the exit lock (26) and vice versa from the exit lock (26) to the first confinement enclosure (E32) of the dry-cleaning device (32), at least one storage area (48, 50) for the temporary storage of plates (10), and a manipulator arm (52) for moving a plate (10) between the dry-cleaning device (32), the wet-cleaning device (34), the conveyor (36) and each temporary storage area (48, 50).

2. The installation (20) according to claim 1, wherein the wet-cleaning device (34) comprises, in its enclosure (E34), at least one washing station (38) for washing a plate (10) with a cleaning liquid and at least one rinsing station (40) for rinsing a plate (10) with a rinsing liquid.

3. The installation (20) according to claim 2, wherein the washing station (38) takes the form of a tank filled with cleaning liquid and equipped with means for emitting very high-frequency ultrasonic waves into this cleaning liquid.

4. The installation (20) according to claim 2 or claim 3, wherein the wet-cleaning device (34) comprises a drying station (40) in its enclosure (E34).

5. The installation (20) according to one of the preceding claims, the entire installation (20) being confined in a protective enclosure (28).
